# EUROPEAN PATENT APPLICATION

(11) **EP 3 553 359 A1**
(43) Date of publication of application: **16.10.2019**
(21) Application number: 19162507.8
(22) Date of filing: 13.03.2019
(51) Int. Cl.: F16L 5/10

(54) **JOINT**

(30) Priority: 12.04.2018 GB 201806027
(71) Applicant: Rolls-Royce plc, London SW1E 6AT (GB)
(72) Inventor: Mason, David, Derby, Derbyshire DE24 8BJ (GB); Tank, Vikesh, Derby, Derbyshire DE24 8BJ (GB)
(74) Representative: Rolls-Royce plc

(57) **Abstract**

A joint (100) configured to be connected to a pipe (108, 109, 115) for providing a conduit through a wall for the contents of the pipe, the joint comprising an inner joint section (101) defining a bore (105) through the joint; an outer joint section (103), configured to be connected to the wall; and, an intermediate joint section (102) that connects the inner joint section to the outer joint section and has a lower stiffness than the inner joint section and the outer joint section.

## Description

The present disclosure relates to a joint for enabling a pipe to pass through a wall. In situations such as a gas turbine engine, pipes may be provided to form a conduit for the transfer of fluids. Care may be required where a pipe is to pass through a wall, for example if it is desirable to prevent a fluid leak path from one side of the wall to the other around the pipe at the point that it passes through the wall.

In some arrangements, it may be desirable to permit some movement of the pipe relative to the wall. Previously, this has been enabled by use of so-called bellows. Such bellows may be provided in the form of a section of the pipe assembly that may have a concertina section of material, enabling one end of the pipe section to move relative to the other end of the pipe section. However, such an arrangement may affect the flow of the fluid through the pipe, possibly creating turbulence and/or changes to the flow area, and may create regions in which the fluid in the pipe can get trapped.

It is therefore desirable to provide an alternative joint for a pipe to pass through a wall.

According to a first aspect there is provided a joint configured to be connected to a pipe for providing a conduit through a wall for the contents of the pipe, the joint comprising:
an inner joint section defining a bore through the joint;
an outer joint section, configured to be connected to the wall; and
an intermediate joint section that connects the inner joint section to the outer joint section and has a lower stiffness than the inner joint section and the outer joint section.

In an arrangement, the inner joint section may have a first end and a second end, configured to be connected to a first and a second pipe, respectively, such that a fluid may, in turn, pass through the first pipe, the bore of the inner joint section and the second pipe.

In an arrangement, the inner joint section may be configured to receive the pipe within the bore.

In an arrangement, the outer joint section may be configured to be connected to the wall to provide a fluid-tight connection between the joint and the wall.

In an arrangement, the intermediate joint section may be resilient. This may enable movement of the inner joint section relative to the outer joint section without damage to the joint.

In an arrangement, at least two of the inner joint section, the outer joint section and the intermediate joint section may be integrally formed and/or may be formed from the same material.

In an arrangement, the intermediate joint section may comprise a plate of corrugated material extending between the inner joint section and the outer joint section.

The plate of corrugated material may comprises one or more ridges and/or one or more troughs. The ridges and/or troughs may surround the inner joint section.

At least one of the size of the ridges and/or troughs and the separation of the ridges and/or troughs may be different in two different regions of the plate of corrugated material.

In an arrangement, the thickness of a section material forming the intermediate joint section may be different in two different regions of the intermediate joint section.

In an arrangement, the outer joint section is formed from a plate of material. The thickness of the plate of material forming the outer joint section may be different from the thickness of material forming the intermediate joint section.

In an arrangement, the stiffness of the intermediate joint section may be configured to provide a desired stiffness of connection between the pipe and the wall.

In an arrangement, the joint may be formed by additive manufacturing.

According to a second aspect there is provided a pipe comprising a joint as described above. The joint may be provided at a location at which conduit provided by the pipe is intended to pass through a wall.

In an arrangement, the pipe may comprise two joints, provided at respective locations spaced apart along a longitudinal axis of the pipe.

According to a third aspect there is provided a gas turbine engine comprising a joint as described above and/or a pipe as described above.

The gas turbine engine may be suitable for an aircraft. It may further comprise:
an engine core comprising a turbine, a compressor, and a core shaft connecting the turbine to the compressor;
a fan located upstream of the engine core, the fan comprising a plurality of fan blades; and
a gearbox that receives an input from the core shaft and outputs drive to the fan so as to drive the fan at a lower rotational speed than the core shaft.

In an arrangement, the turbine may be a first turbine, the compressor may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figures 4****,** **5** and **6** schematically depict an example of a joint for a pipe in perspective view, side elevation view and side cross-section, respectively; and
**Figures 7** and **8** depict in cross-section possible arrangements of such a joint in use.

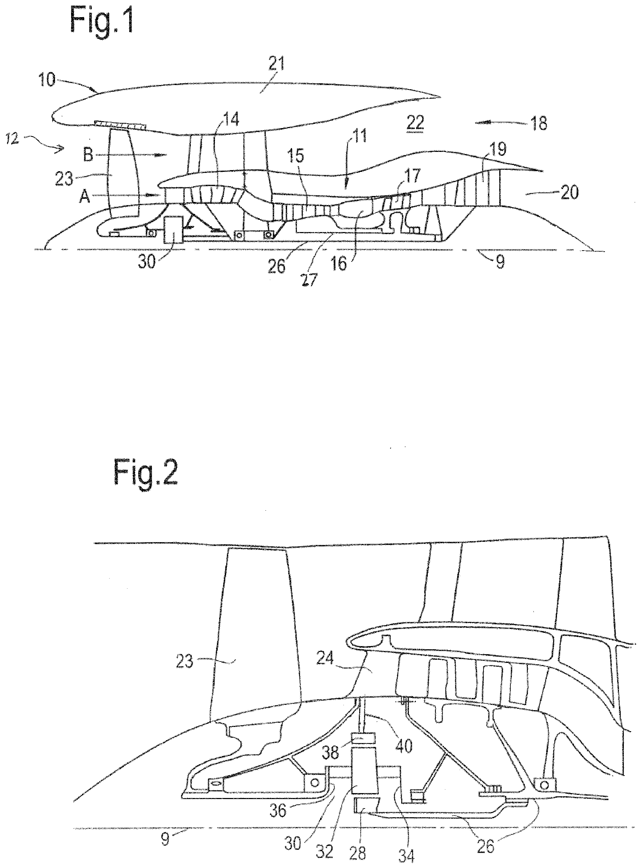

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

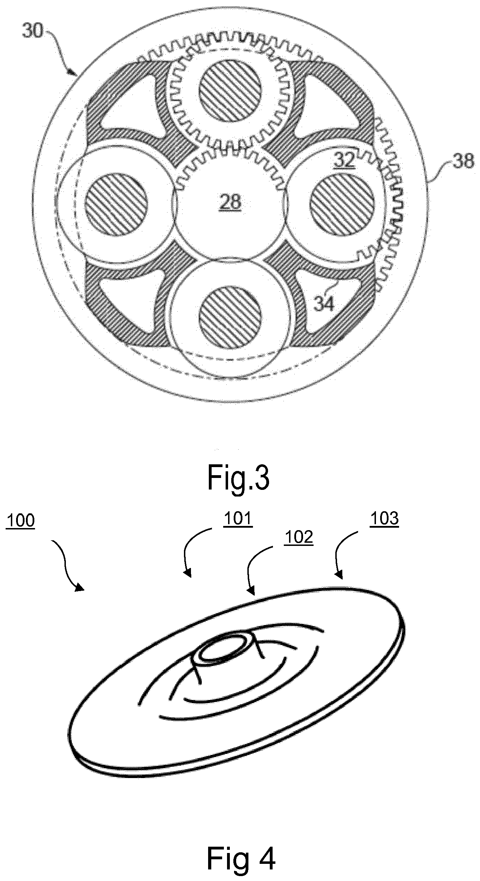

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

In apparatus such as gas turbine engines, including the gas turbine engines discussed above, fluids may be conveyed from one region of the apparatus to another region by one or more pipes. In some situations, it may be necessary for a pipe to pass through a wall within the apparatus. It may therefore be desirable to provide a joint for the location at which the pipe passes through the wall.

In some situations, it may be desirable for the joint to be configured such that the location at which the pipe passes through the wall does not provide a fluid leak path from one side of the wall to the opposite side of the wall. In addition, in some situations, the construction of the apparatus may be such that there may be relative movement of the pipe relative to the wall.

Such relative movement may be in a direction that is parallel to the length of the pipe at the location at which it passes through the wall. Alternatively or additionally, the movement may be in one or more directions that are generally perpendicular to the length of the pipe at the location at which it passes through the wall. In some situations, the movement of the pipe relative to the wall may be a vibration.

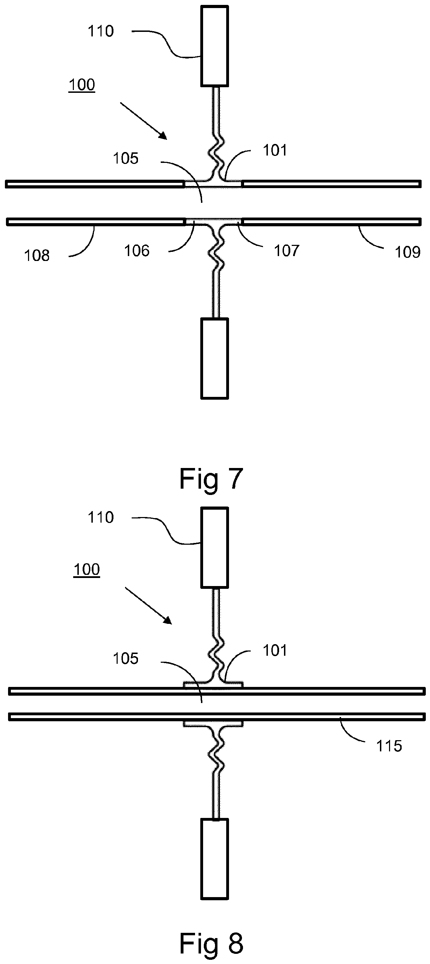

Figures 4, 5 and 6 depict a joint 100 that may be used in situations such as those discussed above. Figures 7 and 8 depict possible arrangements of a joint 100 in use.

The joint 100 includes an inner joint section 101 that defines a bore 105 that passes through the joint 100. The joint 100 further includes an outer joint section 103 that is configured to be connected to the wall 110. Between the inner joint section 101 and the outer joint section 103, there is provided an intermediate joint section 102. The intermediate joint section 102 connects the inner joint section 101 and the outer joint section 103 and has a lower stiffness that the inner joint section 101 and the outer joint section 103.

As discussed further below, the intermediate joint section 102 may be configured such that its stiffness is sufficiently low that it provides a resilient connection between the inner joint section 101 and the outer joint section 103. This may enable movement of the inner joint section 101 relative to the outer joint section 103 without damage to the joint 100. In such an arrangement, when, as discussed below, a pipe is connected to the inner joint section 101 and the wall 110 is connected to the outer joint section 103, the pipe may move relative to the wall 110.

It should be appreciated that, although the outer joint section 103 is depicted in the Figures as an annulus, it need not have such a shape. In particular, the outer joint section 103 may be configured to have any shape that is convenient for connection to the wall 110. In an arrangement, the outer joint section 103 may be configured to be connected to the wall 110 to provide a fluid-tight seal between the outer joint section 103 and the wall 110.

Similarly, the inner joint section 101 may have a cross-section that is convenient for connection to a pipe. In an arrangement, the cross-section of the inner joint section 101 may correspond to the cross-section of the pipe.

As shown in Figure 7, in an arrangement the inner joint section 101 may have first and second ends 106, 107. The first end 106 of the inner joint section 101 may be configured to be connected to a first pipe 108 on a first side of the wall 110. The second end 107 of the inner joint section 101 may be configured to be connected to a second pipe 109 on a second side of the wall 110, opposite to the first side of the wall 110.

It should be appreciated that although in an arrangement such as that shown in Figure 7, first and second sections of pipe 108, 109 are connected by an inner joint section 101 of a joint 100, the combination of the first and second sections of pipe, 108, 109 and the inner joint section 101 may be considered to be a single pipe.

In such an arrangement, the bore 105 defined by the inner joint section 101 may be aligned with, and provide a fluid connection between the interiors of the first and second pipes 108, 109. Such an arrangement may be configured to minimise or prevent any change in the cross-section of the conduit for the fluid that is formed by the combination of the bore 105 and the interiors of the first and second pipes 108, 109. Such an arrangement may also minimise or prevent the creation of regions within which fluid may be trapped. The connections between the inner joint section 101 and the pipes 108, 109 may be formed from suitable pipe connections for the type of fluid to be conveyed within the pipes 108, 109.

As shown in Figure 8, in an arrangement the joint 100 may be configured such that a pipe 115 is received within the bore 105 of the inner joint section 101. In such an arrangement, a single pipe 115 may pass from a first side of the wall 110 to the second side of the wall 110, that is opposite to the first side. In such an arrangement, there may be no disruption to the flow of the fluid passing through the pipe 115 as a result of passing through the wall 110. The pipe 115 may be rigidly secured to the inner joint section 101 in a manner that provides a fluid-tight connection between the inner joint section 101 and the pipe 115.

As discussed above, in an arrangement the outer joint section 103 may have a fluid-tight connection to the wall 110 and the inner joint section 101 may have a fluid-tight connection to the one or more pipes 108, 109, 115. In such an arrangement, fluid within the pipes 108, 109, 115 may pass through the wall 110 but the joint may not otherwise provide a fluid leak path from one side of the wall 110 to the opposite side of the wall 110.

The intermediate joint section 102 may be formed to have a lower stiffness than the inner joint section 101 and/or the outer joint section 103 by a variety of means. For example, the intermediate joint section 102 may be formed from a different material from the inner joint section 101 and/or the outer joint section 103. Such a different material may have a different elastic modular.

In an arrangement, the intermediate joint section 102 may be formed from the same material as the inner joint section 101 and/or the outer joint section 103. In arrangement in which two or more of the inner joint section 101, the outer joint section 103 and the intermediate joint section 102 are formed from the same material, the sections of the joint 100 may be integrally formed.

Whether the sections are formed from the same or different materials, a difference in stiffness between the intermediate joint section 102 and the inner joint section 101 and/or the outer joint section 103 may be provided by the geometry of the intermediate joint section 102 relative to the inner joint section 101 and/or the outer joint section 103.

In an arrangement, the stiffness of the intermediate joint section 102 may be made lower than the stiffness of the inner joint section 101 and/or the outer joint section 103 by forming the intermediate joint section 102 from a section of material having a thickness 112 that is smaller than the thicknesses 111, 113 of the sections of material used to form the inner joint section 101 and the outer joint section 103, respectively.

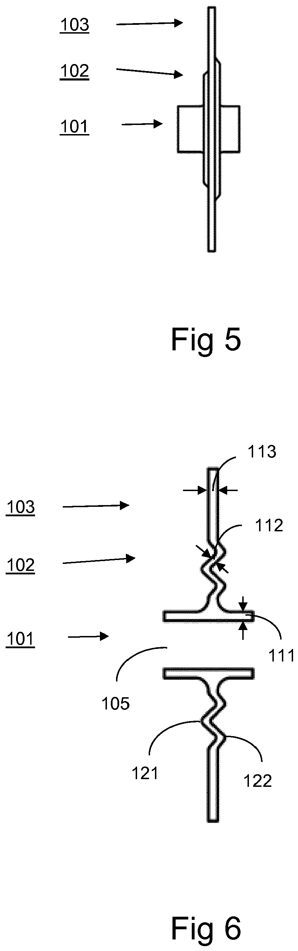

Alternatively or additionally, the intermediate joint section 102 may be configured to have a lower stiffness than the inner joint section and the outer joint section 103 by the configuration of its shape. For example, as shown in Figure 6, the intermediate joint section 102 may be formed from a plate of corrugated material that extends between the inner joint section 101 and the outer joint section 102. In an arrangement, the corrugated material may include one or more ridges and/or troughs 121, 122. In an arrangement, the ridges and/or troughs 121, 122 may extend around the inner joint section 101.

It should be appreciated that the intermediate joint section 102 may be configured to provide a desired stiffness for a particular use of the joint 100. For example, the stiffness may be determined by the choice of the material used to form the intermediate joint section 102, the thickness 112 of the section of material used to form the intermediate joint section 102, the size of any ridges and/or troughs 121, 122, the number of such ridges and/or troughs 121, 122 and the separation of such ridges and/or troughs 121, 122.

In an arrangement, the intermediate joint section 102 may not be uniform. By varying any of the previously discussed factors from one region of the intermediate joint section 102 to another region of the intermediate joint section 102, the response of the joint 100 to particular loading conditions can be adjusted. For example, the joint 100 may be configured such that it is stiffer for movement of the pipe 108, 109, 115 relative to the wall 110 in a first direction than in a second direction.

In order to enable the formation of the joint 100 with the desired characteristics, the joint 100 may be fabricated using an additive manufacturing process, providing greater freedom to form the intermediate joint section 102 with the required geometry than other formation processes. The joint 100 may be fabricated from, for example, titanium and/or nickel based alloys. The additive manufacturing process used may be, for example, selective laser melting and/or electron beam melting. The raw material for the additive manufacturing process may comprise, for example, a metal powder and/or a metal wire. However, it should be appreciated that alternative manufacturing processes, including subtractive manufacturing processes, may also be used.

It should be appreciated that, although the above disclosure relates to the provision of a single joint 100 for a pipe 108, 109, 115 passing through a single wall 110, in an apparatus a pipe may pass through multiple walls. In such an arrangement, a pipe may be provided with a plurality of joints such as those disclosed above, set apart at respective locations along the longitudinal axis of the pipe, at the respective locations at which the pipe traverses the wall. It should be appreciated that where two or more joints are provided to a pipe, the joints need not be the same. For example, at different locations it may be desirable for the stiffness of the intermediate joint sections of the respective joints to be different.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A joint (100) configured to be connected to a pipe (108, 109, 115) for providing a conduit through a wall (100) for the contents of the pipe, the joint comprising:
an inner joint section (101) defining a bore (105) through the joint (100);
an outer joint section (103), configured to be connected to the wall (110); and,
an intermediate joint section (102) that connects the inner joint section (101) to the outer joint section (103) and has a lower stiffness than the inner joint section and the outer joint section.

2. The joint (100) as claimed in claim 1, wherein the inner joint section (101) has a first end (106) and a second end (107), configured to be connected to a first and a second pipe (108, 109), respectively, such that a fluid may, in turn, pass through the first pipe (108), the bore (105) of the inner joint section (101) and the second pipe (109).

3. The joint (100) as claimed in any one of the preceding claims, wherein the outer joint section (103) is configured to be connected to the wall (110) to provide a fluid-tight connection between the joint and the wall.

4. The joint (100) as claimed in any one of the preceding claims, wherein the intermediate joint section (102) is resilient, enabling movement of the inner joint section (101) relative to the outer joint section (103) without damage to the joint.

5. The joint (100) as claimed in any one of the preceding claims, wherein at least two of the inner joint section (101), the outer joint section (103) and the intermediate joint section (102) are integrally formed from the same material.

6. The joint (100) as claimed in any one of the preceding claims, wherein the intermediate joint section (102) comprises a plate of corrugated material extending between the inner joint section (101) and the outer joint section (103).

7. The joint (100) as claimed in claim 6, wherein the plate of corrugated material comprises one or more ridges and/or one or more troughs (121, 122).

8. The joint (100) as claimed in claim 7, wherein said ridges and/or troughs (121, 122) surround the inner joint section (101).

9. The joint (100) as claimed in claim 7 or claim 8, wherein at least one of the size of the ridges and/or troughs (121, 122) and the separation of the ridges and/or troughs (121, 122) is different in two different regions of the plate of corrugated material.

10. The joint (100) as claimed in any one of the preceding claims, wherein the thickness (112) of a section material forming the intermediate joint section (102) is different in two different regions of the intermediate joint section.

11. The joint (100) as claimed in any one of the preceding claims, wherein the outer joint section (103) is formed from a plate of material; and
the thickness (113) of the plate of material forming the outer joint section (103) is different from the thickness (112) of material forming the intermediate joint section (102).

12. The joint (100) as claimed in any one of the preceding claims, wherein the stiffness of the intermediate joint section (102) is configured to provide a desired stiffness of connection between the pipe (108, 109, 115) and the wall (100).

13. A pipe (108, 109, 115) comprising a joint (100) as claimed in any one of the preceding claims, provided at a location at which conduit provided by the pipe is intended to pass through a wall (110).

14. The pipe (108, 109, 115) as claimed in claim 13, comprising two joints (100), provided at respective locations spaced apart along a longitudinal axis of the pipe.

15. A gas turbine engine (10) comprising a joint (100) as claimed in any one of claims 1 to 12 and/or a pipe (108, 109, 115) as claimed in claim 13 or claim 14.
